# EUROPEAN PATENT APPLICATION

(11) **EP 3 293 162 A1**
(43) Date of publication of application: **14.03.2018**
(21) Application number: 17184731.2
(22) Date of filing: 03.08.2017
(51) Int. Cl.: C04B 28/02, C04B 14/28, C04B 111/28

(54) **FIREPROOF BOARD AND METHOD OF MANUFACTURING THE SAME**

(30) Priority: 09.09.2016 KR 20160116623; 09.09.2016 KR 20160116706
(71) Applicant: DOENC Co., Ltd., Hwaseong-si, Gyeonggi-do 18513 (KR)
(72) Inventor: WON, Chul Hee, 18513 GYEONGGI-DO (KR); CHOI, Ho Rim, 18513 GYEONGGI-DO (KR); PARK, Jeong Hun, 18513 GYEONGGI-DO (KR); KIM, Bong Joo, 13520 GYEONGGI-DO (KR); JUNG, Ui In, 02256 SEOUL (KR)
(74) Representative: Fioravanti, Corrado

(57) **Abstract**

A fireproof board and a method of manufacturing the fireproof board are provided. The fireproof board may include a first aggregate using a shell containing lime, a second aggregate containing silicon, and a binder to bind the first aggregate and the second aggregate. The fireproof board may further include an admixture to mix the first aggregate and the second aggregate. The admixture may be a water-reducing agent, and polycarboxylate may be used as an admixture.

## Description

### CROSS-REFERENCE TO RELATED APPLICATION(S)

This application claims the priority benefit of Korean Patent Application No. 10-2016-0116623 filed on September 9, 2016, and Korean Patent Application No. 10-2016-0116706 filed on September 9, 2016, in the Korean Intellectual Property Office, the disclosures of which are incorporated herein by reference for all purposes.

### BACKGROUND

### 1. Field of the Invention

At least one example embodiment relates to a fireproof board, and more particularly, to a fireproof board that may have an enhanced fireproof performance so that the fireproof board may be applied to a fireproof design and to a tunnel, an underground space, and the like, and that may reduce industrial waste using an oyster shell.

### 2. Description of the Related Art

Recently, with development of the economy, large high-rise buildings continue to emerge, and complex use buildings are being built for urban concentration of population and maximization of land use. An increase in a use density of these buildings is further intensified, and risks to disasters are also increasing. For example, when a fire breaks out in a large high-rise building with a high use density, a severity of the fire may increase due to a threat to safety and life of occupants in the building in addition to a damage to the building. Also, because a fire that breaks out in a closed space, for example, a tunnel, a machine room or an underground structure, corresponds to an oil fire, an ultra high temperature situation may occur, which may further increase a damage to a concrete structure. In addition, an issue of a structural deterioration may occur due to a damage of an existing fireproofing protection caused by an explosion.

Currently, magnesium boards and calcium silicate boards that are nonflammable finishing materials, are typically used as fireproof countermeasures for buildings and structures. However, the above boards satisfy only nonflammability through a performance test, not a fireproof performance. Also, because most of raw materials and materials are produced by imports, products are relatively expensive. Due to the above issues, most of fireproof countermeasures are established by a fireproofing protection or nonflammable finishing rather than fireproof finishing. However, a generally used fireproofing protection is vulnerable to a fire caused by an explosion or an ultra high temperature fire. Therefore, it is necessary to study a fireproof board with an enhanced performance in comparison to an existing fireproofing protection to cope with special circumstances such as an ultra high temperature fire.

Among fireproof boards that are currently produced, most of calcium boards are calcium silicate boards. Since a product such as a magnesium board used for a similar purpose is considerably expensive, the product has an economic disadvantage. Also, a performance of a fireproof plaster board used for the similar purpose is not verified at an ultra high temperature, and it is difficult to cope with an explosive fire using the fireproof plaster board due to a low strength of the fireproof plaster board.

An oyster shell has a large amount of foreign substances, such as salts, and it is realistically difficult to use the oyster shell in an architectural field, and accordingly the oyster shell has been buried and treated like a rubble.

### SUMMARY

An aspect provides a fireproof board that may have enough performance to satisfy a bending strength and a compressive strength and that may reduce industrial waste using an oyster shell.

Another aspect provides a fireproof board that may be excellent in a non-flammable performance and fireproof performance and that may be prevented from being separated or damaged during construction.

Still another aspect provides a fireproof board that may reduce a unit cost of a product by supplying materials at low costs by utilizing industrial waste.

Yet another aspect provides a fireproof board that may have various physical properties, for example, a compressive strength, a bending strength, and the like, within various particle size ranges, to have sufficient properties suitable for a place in which the fireproof board is to be used.

According to an aspect, there is provided a fireproof board with an oyster shell as a raw material, wherein the oyster shell is prepared in a form of a mortar by pulverizing the oyster shell into powders, sorting a powder with a particle size of 5 millimeters (mm) or less based on four particle size ranges, and mixing the powder with a binder.

When the oyster shell is washed, dried and pulverized, the pulverized oyster shell may be mixed with the binder.

The oyster shell may be dried at 100°C for 24 hours.

The binder may be cement.

According to another aspect, there is provided a method of manufacturing a fireproof board, including washing a first aggregate, drying the washed first aggregate, pulverizing the dried first aggregate using a pulverizing machine, and mixing the pulverized first aggregate, a second aggregate and a binder. The method may further include adding an admixture to mix the first aggregate and the second aggregate.

The drying of the washed first aggregate may include drying the washed first aggregate at 100°C for 24 hours.

The second aggregate may be standard sand with a particle size of 5 mm or less, and the binder may be cement.

A strength characteristic of the fireproof board may change in response to a change in a mixing ratio of the first aggregate, the second aggregate and the binder.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 illustrates a shape of an oyster shell as a raw material according to an example embodiment;
FIG. 2 illustrates a process of mixing materials and preparing a specimen according to an example embodiment;
FIG. 3 is a graph illustrating compressive strengths measured at a material age of 3 days, a material age of 7 days and a material age of 28 days for each identification (ID) according to an example embodiment;
FIG. 4 is a graph illustrating compressive strengths of an oyster shell aggregate with a particle size of 0.6 millimeter (mm) or less measured at a material age of 3 days, a material age of 7 days and a material age of 28 days for each ID according to an example embodiment;
FIG. 5 is a diagram briefly illustrating a process of manufacturing a fireproof board according to an example embodiment; and
FIG. 6 is a flowchart illustrating a method of manufacturing a fireproof board according to an example embodiment.

### DETAILED DESCRIPTION

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of example embodiments, detailed description of well-known related structures or functions will be omitted when it is deemed that such description will cause ambiguous interpretation of the present disclosure.

According to example embodiments, when a chemical characteristic of a shell is measured, the shell may mainly contain calcium (Ca) and may be extremely stably expanded and contracted due to a thermal shock caused by natural porous nano-inorganic materials. Accordingly, a crack caused by coating may be prevented.

In particular, an oyster shell may include calcium carbonate (CaCO₃) as a main component, and may include a small amount of silicon dioxide (SiO₂) and alumina (Al₂O₃). Also, the oyster shell may have a calcite structure, or may have the same structure as that of a natural limestone.

Example embodiments relate to a fireproof board mortar that may be used to manufacture a fireproof board using an oyster shell that is a natural material. The fireproof board mortar may be put into a mold and hardened, to manufacture a fireproof board.

A fireproof board may be manufactured by mixing a shell component using the above-described mortar, a binder, a silicon-containing aggregate and an admixture.

As described above, an oyster shell may include calcium carbonate (CaCO₃) as a main component, and may include a small amount of silicon dioxide (SiO₂) and alumina (Al₂O₃). When the oyster shell is heated at 900°C, the oyster shell may be in a form of a calcium oxide due to CaCO₃. Also, the oyster shell may have a calcite structure, or may have the same structure as that of a natural limestone.

The above shell, an aggregate, an admixture, a binder, and the like, may be mixed at a set ratio to fill a cast, so as to manufacture a fireproof board with a predetermined shape.

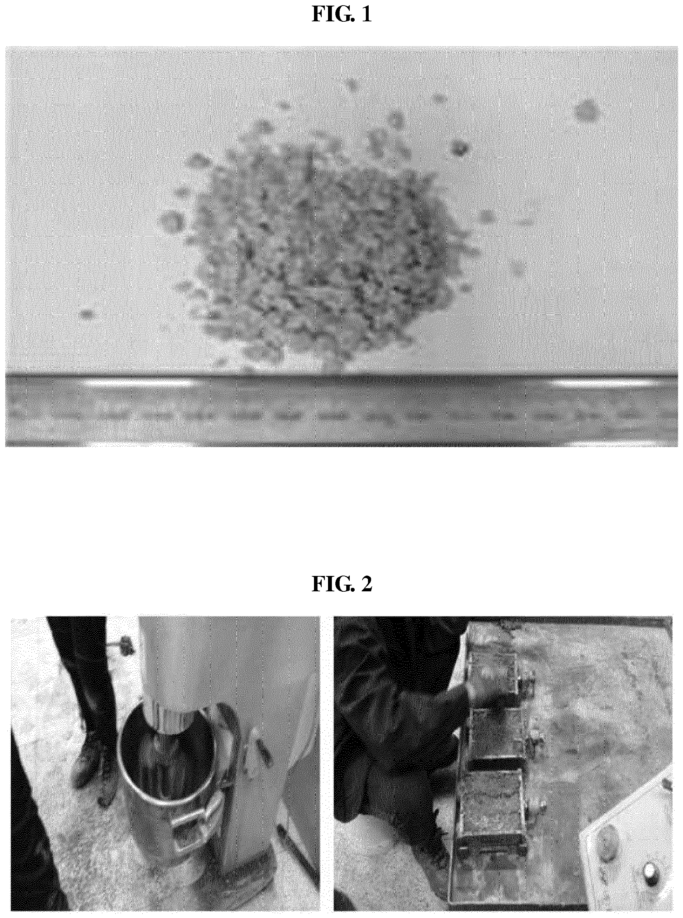

The fireproof board mortar may include, for example, an oyster shell product produced through processing in an oyster shell recycling company. Desirably, impurities may be removed from the oyster shell product in advance through washing and may be dried for 24 hours or longer. FIG. 1 illustrates a photograph of a shape of an oyster shell according to an example embodiment, and FIG. 2 illustrates photographs a process of mixing materials and preparing a specimen according to an example embodiment.

Experiments on an oyster shell that is washed and dried were performed based on a "strength test method of cement" of KS L ISO 679. The experiments will be described below.

**[Table 1]**

| Example 1 | | | | | | | |
|---|---|---|---|---|---|---|---|
| No. | ID | Bending strength | | | Compressive strength | | |
| | | 3 day | 7 day | 28 day | 3 day | 7 day | 28 day |
| 1 | 1:3-50% | 13.6 | 12.2 | 9.0 | 20.1 | 38.7 | 54.2 |
| 2 | 1:2-50% | 8.6 | 7.5 | 11.4 | 33.5 | 35.3 | 52.4 |
| 3 | 1:1-50% | 7.8 | 6.7 | 11.3 | 29.8 | 26.6 | 49.6 |
| 4 | 1:4-50% | 6.4 | 7.1 | 7.4 | 25.4 | 34.9 | 39.3 |
| 5 | 1:5-50% | 8.7 | 4.5 | 3.5 | 7.2 | 10.8 | 16.1 |

Referring to Table 1, experiments with Nos. 1 through 5 in Example 1 are comparative groups, and cement and standard sand were used as a binder and an aggregate, respectively. IDs 1:1 through 1:5 indicate a mass ratio of the aggregate to the cement, and 50% indicates a mass ratio of water to a binder. In other words, 50% indicates that an amount of water corresponds to half of the binder. Also, bending strengths and compressive strengths were measured in a unit of megapascal (MPa), at a material age of 3 days, a material age of 7 days, and a material age of 28 days.

**[Table 2]**

| Example 2 | | | | | | | |
|---|---|---|---|---|---|---|---|
| No | ID | Bending strength | | | Compressive strength | | |
| | | 3 day | 7 day | 28 day | 3 day | 7 day | 28 day |
| 6 | 1:2-80% | 1.8 | 2.6 | | 4.9 | 4.1 | |
| 7 | 1:2-90% | 3.6 | 3.4 | 4.1 | 8.9 | 9.5 | 10.2 |
| 8 | 1:2-100% | 4.0 | 4.2 | 6.0 | 12.2 | 15.3 | 18.7 |
| 9 | 1:1-50% | 2.6 | 2.6 | 5.4 | 5.4 | 7.2 | 12.7 |
| 10 | 1:1-60% | 8.1 | 6.9 | 9.7 | 21.6 | 21.2 | 36.0 |
| 11 | 1:1-70% | 6.2 | 7.9 | 9.4 | 24.8 | 25.6 | 32.1 |
| 12 | 1:1-80% | 4.8 | 6.6 | 6.6 | 19.5 | 23.2 | 24.8 |
| 13 | 1:1-90% | 6.1 | 4.8 | 6.3 | 13.9 | 15.1 | 18.4 |
| 14 | 1:1-100% | 6.0 | 4.6 | 5.4 | 13.2 | 14.9 | 17.1 |

Referring to Table 2, in experiments with Nos. 6 through 14 in Example 2, cement and an oyster shell were used as a binder and an aggregate, respectively. IDs 1:1 and 1:2 indicate a mass ratio of the aggregate to the cement, and a percentage written next to each of the IDs indicates a mass ratio of water to a binder. Also, bending strengths and compressive strengths were measured in a unit of MPa, at a material age of 3 days, a material age of 7 days, and a material age of 28 days.

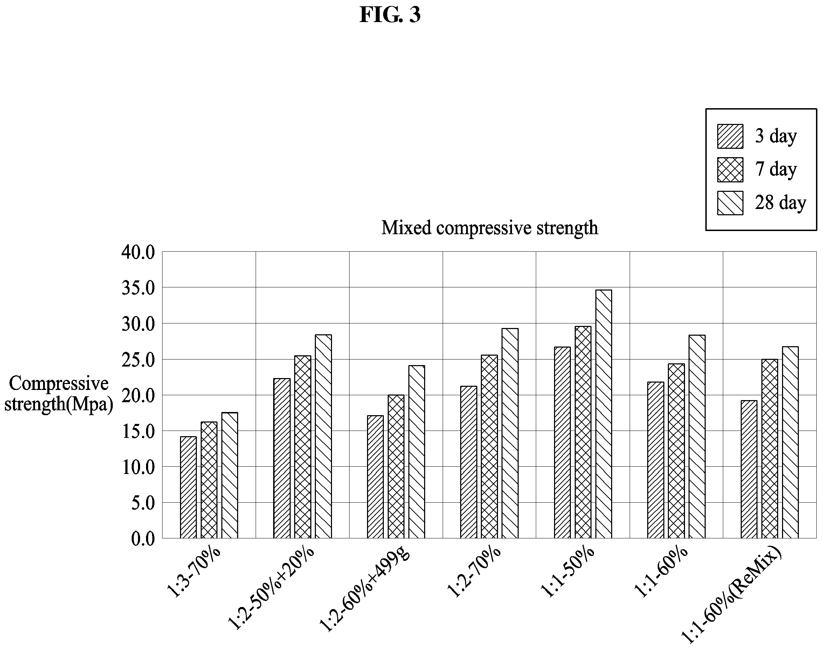

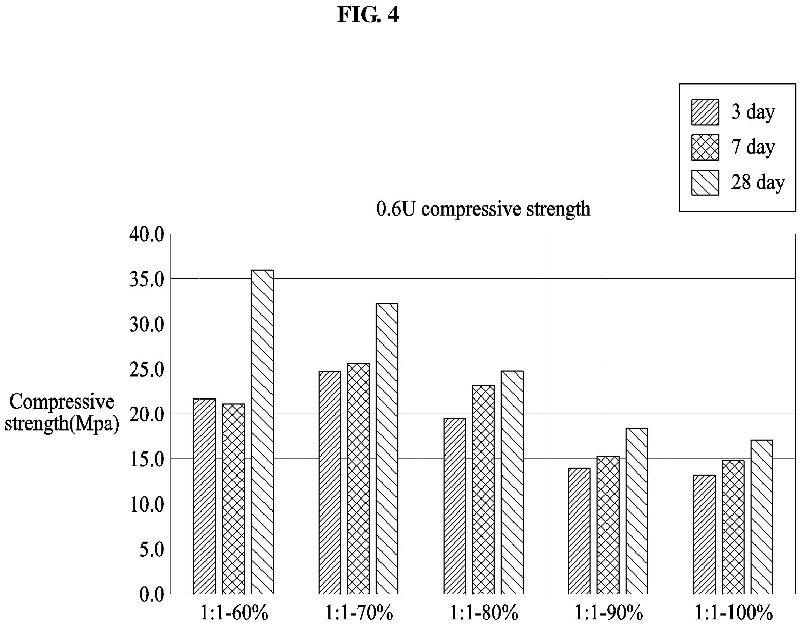

Results of the above experiments are shown in FIGS. 3 and 4. FIG. 3 is a graph illustrating compressive strengths measured at a material age of 3 days, a material age of 7 days and a material age of 28 days for each ID according to an example embodiment. FIG. 4 is a graph illustrating compressive strengths of an oyster shell aggregate with a particle size of 0.6 millimeter (mm) or less measured at a material age of 3 days, a material age of 7 days and a material age of 28 days for each ID according to an example embodiment.

Based on the above description, it is found that a water-to-cement ratio varied from 40% to 100%, instead of limiting to 50%, that a mass ratio varied to 1 : 1 or 1 : 2 instead of 1 : 3 that is a mass ratio of the ISO 679, in an oyster shell in a mortar state as a raw material of a fireproof board, and that a bending strength condition and compressive strength condition were satisfied.

Thus, it is possible to manufacture a fireproof board that may have sufficient properties suitable for a place in which the fireproof board is to be used, by pursuing a diversity of a density and strength. Also, it is possible to utilize an oyster shell as a raw material within various particle size ranges.

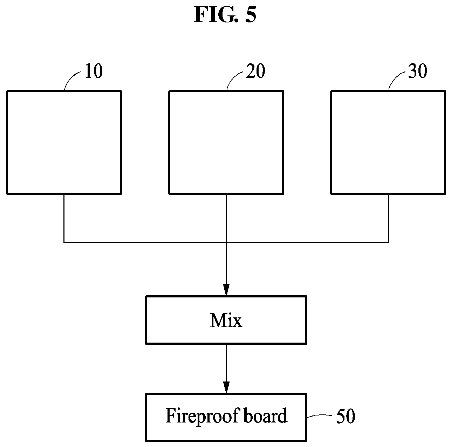

Hereinafter, a method of manufacturing a fireproof board using the above-described fireproof board mortar will be described. FIG. 5 briefly illustrates a process of manufacturing a fireproof board according to an example embodiment.

Referring to FIG. 5, a fireproof board 50 may be manufactured by a mortar that includes a first aggregate 10, a second aggregate 20 and a binder 30. The first aggregate 10 may include, for example, a shell containing lime, and the second aggregate 20 may contain silicon. Also, the binder 30 may bind the first aggregate 10 and the second aggregate 20.

The mortar may be formed by mixing the first aggregate 10, the second aggregate 20 and the binder 30 at a preset ratio, and may be used to manufacture the fireproof board 50. For example, a cast may be filled with the mortar, to manufacture the fireproof board 50 with a predetermined shape.

As the first aggregate 10, a shell containing lime (for example, calcium (Ca)), for example, an oyster shell may be used. In particular, an oyster shell may include calcium carbonate (CaCO₃) as a main component, and may include a small amount of silicon dioxide (SiO₂) and alumina (Al₂O₃). When the oyster shell is heated at 900°C, the oyster shell may be in a form of a calcium oxide due to CaCO₃. Also, the oyster shell may have a calcite structure, or may have the same structure as that of a natural limestone. The oyster shell may include about 92.8% of calcium carbonate (CaCO3), may have a porous body and a large specific surface area. Accordingly, the oyster shell may be expected to have a high adsorbability to other heavy metals and organic materials. Also, referring to research results about strength and permeability characteristics, oyster shells are easily broken, are lightweight and have a similar strength to sand. In addition, because the oyster shell includes a large amount of calcium used as a raw material of a fireproof board, a calcium fireproof board with excellent fireproof properties may be manufactured. For example, an oyster shell may be classified as powders with a particle size of 5 mm or less, and may be used as a fine aggregate.

The second aggregate 20 may include, for example, standard sand with a particle size of 5 mm or less. The binder may include, for example, cement.

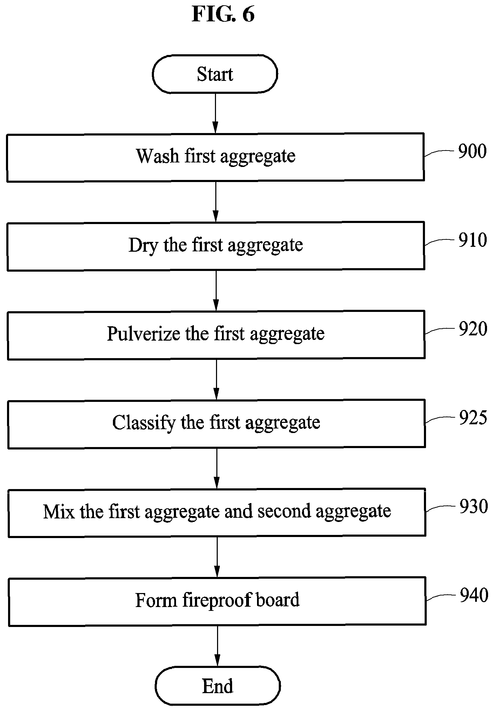

FIG. 6 is a flowchart illustrating a method of manufacturing a fireproof board according to an example embodiment.

Referring to FIG. 6, the method may include operation 900 of washing the first aggregate 10, operation 910 of drying the washed first aggregate 10, operation 920 of pulverizing the dried first aggregate 10 using a pulverizing machine, operation 925 of classifying the pulverized first aggregate 10, operation 930 of forming a mortar by mixing the pulverized first aggregate 10, the second aggregate 20 and the binder 30, and operation 940 of forming a fireproof board using the formed mortar.

In operation 910, the first aggregate 10 may be dried at about 100°C for 24 hours.

In operation 920, a cutter mill may be used as a pulverizing machine.

In operation 920, the first aggregate 10 may be pulverized into a fine aggregate with a particle size of 5 mm or less. Since an oyster shell is lightweight and has a similar strength to sand, it may be difficult to manufacture a fireproof board with a sufficiently high strength using a mortar that is formed of a coarse aggregate. Referring to the "study on strength properties of mortar using oyster shell as aggregate (in Journal of the 2016 Annual Spring Conference, Vol. 16 No. 1 (Serial Number 30)," it is found that when an oyster shell is classified as powders with a particle size of 5 mm or less based on a fine aggregate, and when an appropriate material age is set, it is possible to ensure an enough strength to be used as a fireproof board. A research result about a particle size distribution based on a raw material process of an oyster shell will be described below.

In operation 925, the first aggregate 10 may be classified using, for example, a vibration sorter. For example, the first aggregate 10 may be sorted and classified for each particle size using a vibration sorter in addition to a screen mounted in a cutter mill.

The pulverizing machine used to pulverize the oyster shell into powders with a particle size of 5 mm or less is merely an example, and example embodiments are not necessarily limited to the pulverizing machine.

A particle size distribution of materials generated when different screens are used for a cutter mill was examined. Also, particle size distributions generated through a primary pulverization and a secondary pulverization for a roll mill were examined. Experimental conditions are shown in Table 3 below.

**[Table 3]**

| Classification | Factor | Level | Number of levels |
|---|---|---|---|
| Cutter mill | Screen size (mm) | 8, 12, 20 | 3 |
| Roll mill | Number of times raw material is put | 1, 2 | 2 |

Results of the experiments based on Table 3 are shown in Table 4 below.

**[Table 4]**

| Classificatio n | Amount of raw material s to be put (g) | Residual rate (%) | | | | | | | | Recove ry rate (%) | Loss rate (%) |
|---|---|---|---|---|---|---|---|---|---|---|---|
| | | 10 mm | 5 mm | 2.5 mm | 1.2 mm | 0.6 mm | 0.3 mm | 0.1 5 mm | unde r | | |
| Cutter mill | 4,322.0 | 0 | 1.1 | 32. | 27. | 24. | 9.5 | 1.8 | 0.5 | 97.3 | 2.7 |
| (8 mm) | | | | 6 | 1 | 7 | | | | | |
| Cutter mill (12 mm) | 4,976.0 | 0 | 11. 4 | 34. 2 | 20. 8 | 15. 8 | 11. 9 | 3.5 | 0.6 | 98.2 | 1.8 |
| Cutter mill (20 mm) | 5,266.0 | 10. 9 | 37. 7 | 22. 5 | 11. 9 | 8.2 | 5.2 | 1.8 | 0.7 | 98.9 | 1.1 |
| Roll mill (Primary) | 3,353.0 | 34. 0 | 25. 9 | 16. 2 | 10. 2 | 7.1 | 4.1 | 1.7 | 0.6 | 99.8 | 0.2 |
| Roll mill (Secondary) | 3,343.5 | 10. 9 | 26. 9 | 27. 3 | 10. 6 | 8.3 | 5.8 | 3.3 | 0.6 | 93.7 | 6.3 |

Referring to Table 4, as a size of each of screens of the cutter mills increases, the recovery rate increased from 97.3% to 98.9%. Also, the recovery rates of the roll mills were superior to those of the cutter mills, however, the recovery rate of the roll mill for the secondary pulverization was dramatically reduced after a raw material obtained by the secondary pulverization is put. In the case of the cutter mills, a larger amount of fine power was obtained in a process due to a dry oyster shell as a raw material.

In addition, the recovery rate of the roll mill for the primary pulverization was excellent, however, the primary pulverization was hardly performed due to a flat shape of the oyster shell. Also, the recovery rate of the roll mill for the secondary pulverization was reduced dramatically due to a structural characteristic of the roll mill. Thus, when the same pulverizing machine is assumed to be repeatedly used, the cutter mill may be effectively used to pulverize the oyster shell in comparison to using of the roll mill.

As shown in the recovery rates, to use the oyster shell as a fine aggregate, a screen of 8 mm and/or a screen of 12 mm were advantageously used in comparison to a screen of 20 mm.

As described above, according to example embodiments, it is possible to realize enough performance to satisfy a bending strength and a compressive strength and also possible to reduce industrial waste using an oyster shell.

Also, according to example embodiments, it is possible to enhance a non-flammable performance and fireproof performance of a fireproof board and possible to prevent the fireproof board from being separated or damaged during construction.

In addition, according to example embodiments, it is possible to reduce a unit price of a product by supplying materials at low costs by utilizing industrial waste.

Furthermore, according to example embodiments, it is possible to realize sufficient properties of a fireproof board suitable for a place in which the fireproof board is to be used, based on various physical properties of the fireproof board, for example, a compressive strength, a bending strength, and the like, within various particle size ranges.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A fireproof board with an oyster shell as a raw material, wherein the oyster shell is prepared in a form of a mortar by pulverizing the oyster shell into powders, sorting a powder with a particle size of 5 millimeters (mm) or less and mixing the powder with a binder.

2. The fireproof board of claim 1, wherein when the oyster shell is washed, dried and pulverized, the pulverized oyster shell is mixed with the binder.

3. The fireproof board of claim 2, wherein the oyster shell is dried at 100°C for 24 hours.

4. The fireproof board of claim 1, wherein the binder is cement.

5. A method of manufacturing a fireproof board, the method comprising:
washing a first aggregate;
drying the washed first aggregate;
pulverizing the dried first aggregate using a pulverizing machine; and
mixing the pulverized first aggregate, a second aggregate and a binder.

6. The method of claim 5, further comprising:
adding an admixture to mix the first aggregate and the second aggregate.

7. The method of claim 5, wherein
the first aggregate is an oyster shell, and
the second aggregate is standard sand.

8. The method of claim 5, wherein the drying of the washed first aggregate comprises drying the washed first aggregate at 100°C for 24 hours.

9. The method of claim 5, wherein
the second aggregate is standard sand with a particle size of 5 mm or less, and
the binder is cement.

10. The method of claim 5, wherein a strength characteristic of the fireproof board changes in response to a change in a mixing ratio of the first aggregate, the second aggregate and the binder.
